# EUROPÄISCHE PATENTSCHRIFT

(11) **EP 0 406 819 B1**
(45) Veröffentlichungstag und Bekanntmachung des Hinweises auf die Patenterteilung: **06.10.1993**
(21) Anmeldenummer: 90112730.8
(22) Anmeldetag: 04.07.1990
(51) Int. Cl.: B65G 21/00, B65G 15/00, B65G 69/18

(54) **Transportband**
Conveyor belt
Bande de transport

(30) Priorität: 06.07.1989 DE 3922163
(43) Veröffentlichungstag der Anmeldung: 09.01.1991
(73) Patentinhaber: TRAPO-Stumpf GmbH, 48712 Gescher (DE)
(72) Erfinder: Nelles, Wilhelm, D-4284 Hilden (DE)
(74) Vertreter: Cohausz & Florack Patentanwälte

(56) Entgegenhaltungen:
- AT-B- 265 135
- DE-A- 2 852 063
- DE-A- 2 925 587
- GB-A- 2 128 953

## Beschreibung

Die Erfindung betrifft ein umlaufendes Transportband in einem Lagergestell mit einem das Band außen umgebenden Gehäuse, wobei das Gehäuse das Band bis auf die Bandoberseite allseitig umgibt.

Es sind Transportbänder bekannt, die endlos durch zwei Umlenkrollen gelagert und durch einen Elektromotor angetrieben sind. So ist es aus der AT-B- 265 135 bekannt, das Band in der Gehäuseoberseite so tief zu lagern, daß das Gehäuse mit seiner oberen Tischfläche das Band seitlich umgibt. Unterhalb des Bandes befindet sich eine Saugwanne, die durch Öffnungen bzw. Spalten im Band platten- oder blattförmige Gegenstände auf der Bandoberseite aussaugt. Diese Vorrichtungen erzeugen aufgrund des Abriebes Kleinstpartikel (Staub), die in die Umgebungsluft des Arbeitsraumes gelangen und insbesondere die Luft von Reinräumen kontaminieren.

Aus der deutschen Patentschrift DE-A- 2852063 ist es an sich bekannt, unterhalb eines Transportbandes Unterdruck vorzusehen. Hierdurch werden zu transportierende Werkstücke in Öffnungen des Bandes festgesaugt. Mit beiden Längsrändern liegt das Band abgedichtet in engen Schlitzen ein, um zu verhindern, daß über die Längsränder Luft eingesaugt und damit das unterhalb des Bandes erzeugte Vakuum verringert wird. Der an den Längsrändern erzeugte Abrieb gelangt ständig in die Umgebungsluft. Dies besonders dann, wenn eine der Öffnungen nicht dicht durch ein Werkstück verschlosen oder sogar während eines Werkstückwechsels vollständig offen ist, da dann der Unterdruck nicht genügend aufrecht erhalten bleibt.

Aufgabe der Erfindung ist es ein umlaufendes Transportband der eingangs genannten Art so zu verbessern, daß keine Partikel in die rein zu haltende Umgebung abgegeben werden. Darüberhinaus ist es Aufgabe der Erfindung eine solche Vorrichtung konstruktiv einfach, ausfallsicher und leicht handhabbar zu gestalten, wobei vom Transportband transportierte Werkstücke und/oder Werkstückträger bei weiterlaufendem Transportband anhaltbar sind, ohne Partikel durch Abrieb zu erzeugen.

Diese Aufgaben werden erfindungsgemäß dadurch gelöst, daß das Band keine Öffnungen aufweist, daß am Gehäuseinneren Unterdruck anliegt, und daß der Rand der die Bandoberseite übergreifenden Gehäusewand einen schmalen Spalt (S) mit der Bandoberseite bildet.

Durch das Transportband, durch Lagerung als auch durch den Antrieb erzeugte Partikel werden durch den Unterdruck im Gehäuseinnern abgesaugt, so daß sie in die Umgebungsluft nicht gelangen können. Besonders vorteilhaft ist hierbei, wenn die Gehäusewand die Bandoberseite an den Längsrändern übergreift, so daß auch in diesem Bereich erzeugte Partikel abgesaugt werden. Ferner wird vorgeschlagen, daß am Rand der die Bandoberseite übergreifenden Gehäusewand Rollen, insbesondere aus Metall gelagert sind, die auf der Bandoberseite laufen und somit eine statische Aufladung des Bandes verhindern, als auch einen exakten Absaugspalt erzeugen.

Ein besonders geringer Abrieb der Bandoberseite wird dann erzeugt, wenn sie mit Metall, insbesondere mit Edelstahl beschichtet ist. Hierbei kann die Beschichtung eine Folie, insbesondere eine Edelstahlfolie sein.

Besonders vorteilhaft ist es, wenn an den Längsrändern des Bandes seitlich paarweise Schieber gelagert sind, die mit vorderen Klemmflächen die Bandlängsränder an der Oberseite übergreifen um auf dem Band aufliegende Werkstückträger festzuklemmen. Damit diese Werkstückträger bzw. Werkstücke während ihres Festhaltens nicht auf der Bandoberseite reiben und Partikel erzeugen wird vorgeschlagen, daß die Schieber schräg angeordnet sind und daß im unteren Bereich der Klemmflächen selbst Nasen mit Schrägflächen vorstehen, die die Werkstückträger seitlich untergreifen und anheben.

Hierbei können die seitlichen Längsränder der Werkstückträger an der Unterseite Abschrägungen für die Schrägflächen der Nasen aufweisen.

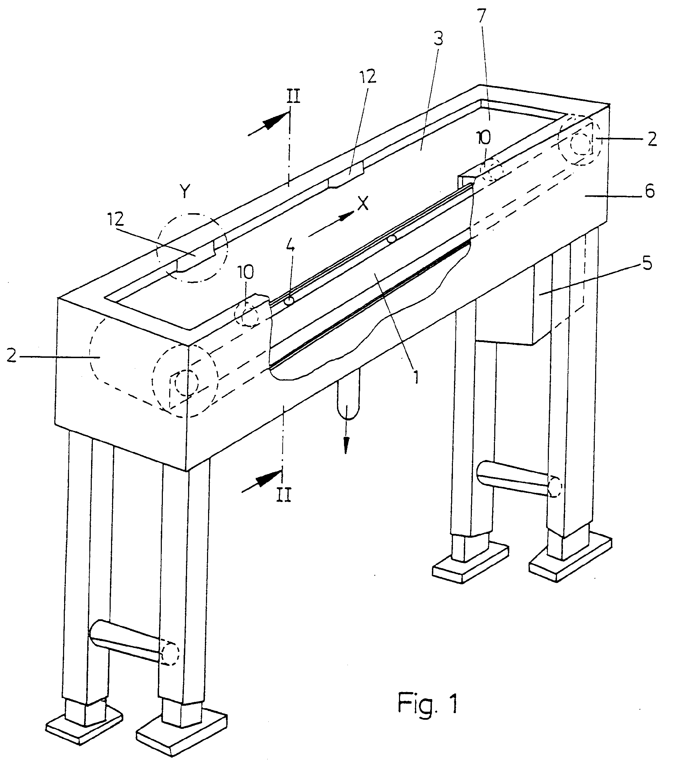

Ein Ausführungsbeispiel der Erfindung ist in den Zeichnungen dargestellt und wird im folgenden näher beschrieben. Es zeigen
Fig. 1 eine perspektivische Ansicht der Vorrichtung,

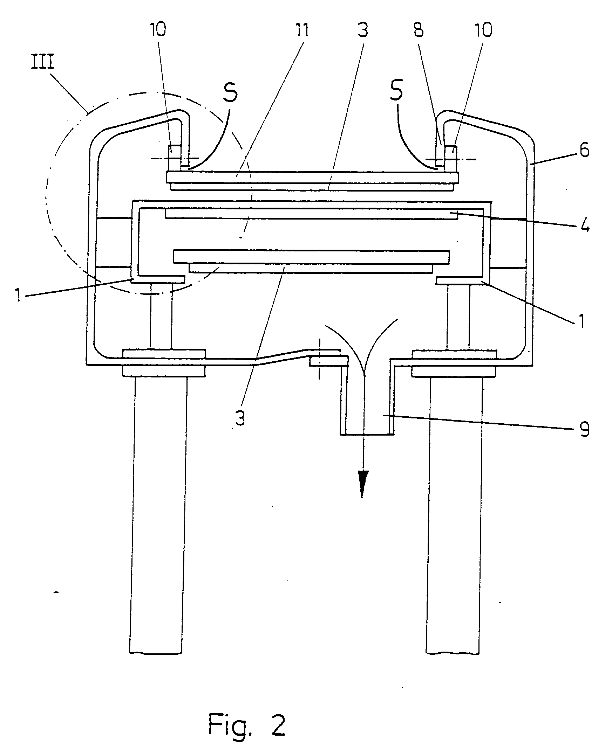

Fig. 2 einen Schnitt nach II-II in Fig. 1 und

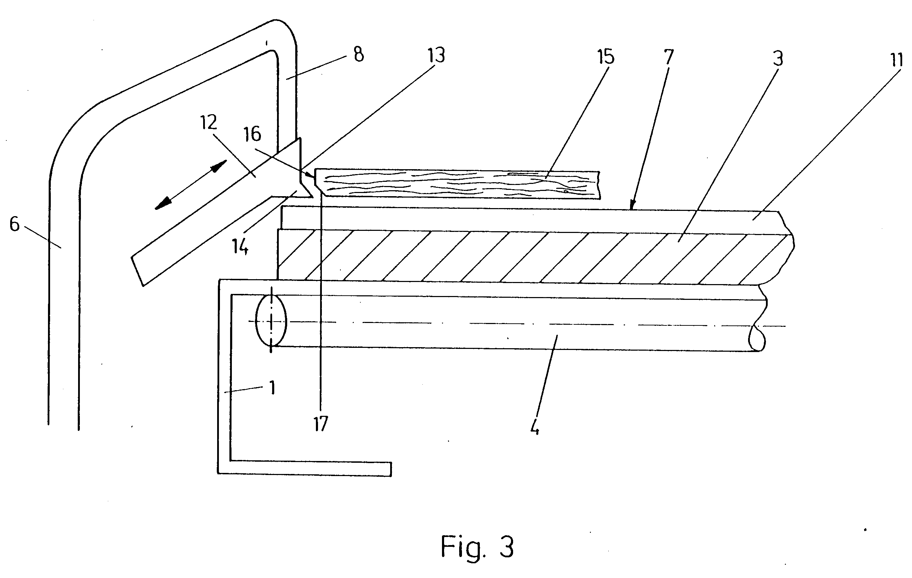

Fig. 3 das Detail III aus Fig. 2 in vergrößertem Maßstab.

Die Transportvorrichtung weist eine waagerechte sich etwa über die gesamte Länge der Vorrichtung erstreckende Bandbrücke 1 auf, an deren beiden Enden je eine Umlenktrommel 2 mit waagerechter Achse gelagert ist. Über diese beiden Umlenktrommeln ist ein Endlosband 3 geführt, in dessen Innen- bzw. Zwischenraum die Bandbrücke 1 einliegt. An der Oberseite der Bandbrücke 1 sind waagerechte Rollen 4 parallel zu den Umlenkrollen gelagert, so daß die Unterseite des Endlosbandes 3 in regelmäßigen Abständen auf diesen Rollen aufliegt.

Das Endlosband 3 als auch die Bandbrücke 1 und vorzugsweise der Antrieb 5 sind von einem Gehäuse 6 allseitig umgeben, bis auf die Oberseite 7 des oberen Trumps des Endlosbandes 3.

Hierbei sind die Seitenränder des Endlosbandes 3 von oberhalb des Bandes angeordneten Seitenrändern 8 des Gehäuses 6 übergriffen, so daß die nach unten gebogenen Ränder 8 mit ihren Unterseiten nur einen schmalen Spalt mit der Oberseite 7 des Bandes bilden. Durch diesen Spalt wird Raumluft in das Gehäuseinnere gesaugt, da das Gehäuseinnere über einen Stutzen 9 mit Unterdruck verbunden ist.

Auf den Innenseiten der senkrechten Ränder 8 sind Rollen 10 parallel zu den Rollen 2 und 4 gelagert, die in regelmäßigen Abständen angeordnet sind und die Ränder der Oberseite 7 nach unten drücken, so daß ein gleichmäßiger und damit präziser Spalt (S) zwischen Bandoberseite und Rand 8 erzeugt wird, durch den Raumluft in das Gehäuseinnere gesaugt wird.

Das Endlosband 3 ist luftdurchlässig und weist keine Öffnungen auf, d.h. es ist durchgehend geschlossen. Die Bandaußen- bzw. Oberseite 7 ist mit Metall, insbesondere mit Edelstahl und vorzugsweise mit einer Edelstahlfolie beschichtet, auf der die Rollen 10 laufen und auf der die Werkstücke bzw. Werkstückträger zu liegen kommen, die zu transportieren sind. Das Band kann auch komplett Stahl bzw. Edelstahl sein, z.B. Federstahl, oder ein in irgendeiner Form verschleißfest beschichtetes Band sein.

An den Längsrändern des Bandes sind seitlich paarweise schräg angeordnete Schieber 12 gelagert, die mit vorderen Klemmflächen 13 die Bandlängsränder an der Oberseite übergreifen, um auf dem Band 3 aufliegende Werkstückträger 15 festzuklemmen. Im unteren Bereich Klemmflächen 13 stehen Nasen 14 mit Schrägflächen vor, die die Werkstückträger seitlich untergreifen und durch die eigene Schräglage der Schieber anheben. Die seitlichen Längsränder 16 der Werkstückträger 15 weisen an der Unterseite Abschrägungen für die Schrägflächen der Nasen 14 auf.

Das Gehäuse 6 kann von senkrechten Hohlstützen gelagert sein, wobei statt des Stutzens 9 der Gehäuseinnenraum über eine solche Stütze abgesaugt werden kann. Ebenso ist das motorumgebende Gehäuse an dem Unterdrucksystem angeschlossen und wird abgesaugt.

## Patentansprüche

1. Umlaufendes Transportband in einem Lagergestell mit einem das Band (3) außen umgebenden Gehäuse (6), wobei das Gehäuse (6) das Band (3) bis auf die Bandoberseite (7) allseitig umgibt, **dadurch gekennzeichnet**,
- daß das Band keine Öffnungen aufweist,
- daß am Gehäuseinneren Unterdruck anliegt, und
- daß der Rand (8) der die Bandoberseite (7) übergreifenden Gehäusewand einen schmalen Spalt (S) mit der Bandoberseite (7) bildet.

2. Transportband nach Anspruch 1, **dadurch gekennzeichnet**, daß die Gehäusewand mit einem Rand (8) die Bandoberseite (7) an den Längsrändern übergreift.

3. Transportband nach Anspruch 1 oder 2, **dadurch gekennzeichnet**, daß am Rand (8) der die Bandoberseite (7) übergreifenden Gehäusewand Rollen (10), insbesondere aus Metall gelagert sind, die auf der Bandoberseite (7) laufen.

4. Transportband nach einem der vorherigen Ansprüche, **dadurch gekennzeichnet**, daß die Bandoberseite (7) mit Metall, insbesondere mit Edelstahl beschichtet ist.

5. Transportband nach Anspruch 4, **dadurch gekennzeichnet**, daß die Beschichtung (11) eine Folie, insbesondere eine Edelstahlfolie ist.

6. Transportband nach einem der vorherigen Ansprüche, **dadurch gekennzeichnet**, daß an den Längsrändern des Bandes seitlich paarweise Schieber (12) gelagert sind, die mit vorderen Klemmflächen (13) die Bandlängsränder an der Oberseite übergreifen um auf dem Band (3) aufliegende Werkstückträger (15) festzuklemmen.

7. Transportband nach Anspruch 6, **dadurch gekennzeichnet**, daß im unteren Bereich der Klemmflächen (13) Nasen (14) mit Schrägflächen vorstehen, die die Werkstückträger (15) seitlich untergreifen und fixieren, wobei die schräge Anordnung den Träger abhebt.

8. Transportband nach Anspruch 7, **dadurch gekennzeichnet**, daß die seitlichen Längsränder (16) der Werkstückträger (15) an der Unterseite Abschrägungen (17) für die Schrägflächen der Nasen (14) aufweisen.

## Claims

1. A conveyor belt rotating in a bearing frame having a casing (6) enclosing the belt (3) on the outside, the casing (6) enclosing the belt (3) on all sides except for the top side (7) of the belt, characterized in that
- the belt has no openings,
- negative pressure is applied to the inside of the casing, and
- the edge (8) of the casing wall engaging over the top side (7) of the belt forms a narrow gap (S) with the top side (7) of the belt.

2. A conveyor belt according to claim 1, characterized in that the casing wall engages over the top side (7) of the belt by an edge (8) at the longitudinal edges.

3. A conveyor belt according to claims 1 or 2, characterized in that mounted at the edge (8) of the casing wall engaging over the top side (7) of the belt are rollers (10), more particularly metal rollers, which run on the top side (7) of the belt.

4. A conveyor belt according to one of the preceding claims, characterized in that the top side (7) of the belt is coated with metal, more particularly special steel.

5. A conveyor belt according to claim 4, characterized in that the coating (11) is a foil, more particularly a special steel foil.

6. A conveyor belt according to one of the preceding claims, characterized in that mounted laterally in pairs at the longitudinal edges of the belt are pushers (12) which engage by front clamping surfaces (13) over the longitudinal edges of the belt on the top side, to clamp work piece supports (15) borne on the belt (3).

7. A conveyor belt according to claim 6, characterized in that in the lower zone of the clamping surfaces (13), lugs (14) having inclined surfaces project which laterally engage under and fix the workpiece supports (15), the inclined arrangement lifting the support.

8. A conveyor belt according to claim 7, characterized in that the underside of the lateral longitudinal edges (16) of the workpiece supports (15) are formed with chamfers (17) for the inclined surfaces of the lugs (14).

## Revendications

1. Bande transporteuse rotative dans un casier de stockage avec un carter (6) entourant extérieurement la bande (3), le carter (6) entourant la bande (3) de tous côtés jusqu'à la face supérieure (7) de la bande,
caractérisée en ce,
- que la bande ne présente pas d'ouvertures,
- qu'une dépression est adjointe à l'intérieur du carter, et
- que le bord (8) de la paroi du carter enjambant la face supérieure (7) de la bande forme avec la face supérieure (7) de la bande une fente étroite (S).

2. Bande transporteuse selon la revendication 1,
caractérisée en ce que la paroi du carter enjambe par un bord (8) la face supérieure (7) de la bande sur les bords longitudinaux.

3. Bande transporteuse selon la revendication 1 ou 2,
caractérisée en ce que des rouleaux (10), en particulier en métal, sont logés au bord (8) de la paroi de carter enjambant la face supérieure (7) de la bande et courent sur la face supérieure (7) de la bande.

4. Bande transporteuse selon l'une des revendications précédentes,
caractérisée en ce que la face supérieure (7) de la bande est revêtue de métal, en particulier d'acier fin.

5. Bande transporteuse selon la revendication 4,
caractérisée en ce que le revêtement (11) est une feuille, en particulier une feuille d'acier fin.

6. Bande transporteuse selon l'une des revendications précédentes,
caractérisée en ce que des coulisses (12) sont logées latéralement par paires sur les bords longitudinaux de la bande et enjambent les bords longitudinaux de la bande sur la face supérieure par des surfaces de serrage antérieures (13) pour bloquer des supports de pièces d'oeuvre (15) soutenues sur la bande (3).

7. Bande transporteuse selon la revendication 6,
caractérisée en ce que des becs (14) avec des surfaces inclinées font saillie dans la zone inférieure des surfaces de serrage (13) et prennent par dessous latéralement et fixent les supports de pièces d'oeuvre (15), la disposition inclinée soulevant les supports.

8. Bande transporteuse selon la revendication 7,
caractérisée en ce que les bords longitudinaux latéraux (16) des supports de pièces d'oeuvre (15) présentent sur la face inférieure des chanfreins (17) pour les surfaces inclinées des becs (14).
